# EUROPEAN PATENT SPECIFICATION

(11) **EP 3 260 794 B1**
(45) Date of publication and mention of the grant of the patent: **19.05.2021**
(21) Application number: 15882642.0
(22) Date of filing: 20.02.2015
(51) Int. Cl.: F24H 1/00, F28F 19/00, F24H 4/02, F24D 19/00, F24D 19/10, F28G 7/00

(54) **HEAT EXCHANGING DEVICE AND HEAT PUMP WATER HEATER**
WÄRMETAUSCHERVORRICHTUNG UND WÄRMEPUMPENWASSERERHITZER
DISPOSITIF D'ÉCHANGE DE CHALEUR ET CHAUFFE EAU À POMPE À CHALEUR

(43) Date of publication of application: 27.12.2017
(73) Proprietor: Mitsubishi Electric Corporation, Chiyoda-ku Tokyo 100-8310 (JP)
(72) Inventor: SAKAMOTO, Nobuhide, Tokyo 100-8310 (JP); MIYA, Kazuhiro, Tokyo 100-8310 (JP); SAITO, Tadashi, Tokyo 100-8310 (JP)
(74) Representative: Pfenning, Meinig & Partner mbB
(86) International application number: PCT/JP2015/054823
(87) International publication number: WO 2016/132540

(56) References cited:
- WO-A1-2010/029786
- WO-A1-2012/073380
- DE-A1- 10 348 536
- JP-A- 2004 144 445
- JP-A- 2009 243 808
- JP-A- 2012 117 776
- JP-A- 2013 253 745
- JP-A- 2014 016 098
- JP-A- 2014 016 098
- JP-A- 2014 156 992

## Description

### Technical Field

The present invention relates to a heat exchange device in a cooling apparatus such as a water heater, and a heat-pump water heater including the heat exchange device.

### Background Art

Examples of water heaters configured to supply hot water at a bathroom and a kitchen include a heat-pump water heater using a CO₂ refrigerant. The heat-pump water heater is extremely effective in terms of energy saving and global warming prevention. The heat-pump water heater can absorb heat from air and produce hot water with energy several times as large as the energy of the heat. Thus, with the heat-pump water heater, energy larger than electric energy used in operation can be used.

Heat is exchanged between refrigerant and water on the heat-transfer surface of a heat exchanger of the heat-pump water heater. However, any object such as scale adhered to the heat-transfer surface of the heat exchanger through which water flows causes problems such as reduction in a heat exchange area and blockage of the heat exchanger.

Some known methods are intended to solve these problems by performing water pulsing, instead of using chemical solution, to remove any scale adhered to the heat-transfer surface of the heat exchanger (refer to Patent Literature 1, for example).

### Citation List

### Patent Literature

Patent Literature 1: Japanese Unexamined Patent Application Publication No. 2014-16098. A further solution is shown in Patent document JP 2013 253745 A comprising the features of the preamble of claim 1.

### Summary of Invention

### Technical Problem

As disclosed in the technology of Patent Literature 1, an increased flow ratio at pulsing provides a larger scale reduction effect, but also causes excessive reduction in a water-output temperature and impingement damage due to an increased flow speed, which is likely to lead to failure of a pump.

On the other hand, control to adjust the water-output temperature to a target value causes problems such as large temperature variation during pulsing, redundant pulsing operation when scale reduction is unnecessary, for example, at a high water-input temperature, and a flow ratio maintained constant irrespective of water characteristics.

The present invention is intended to solve the above-described problems and provide a heat exchange device configured to efficiently reduce scale adhesion inside a heat exchanger configured to allow heat exchange between water and refrigerant. Solution to Problem

A heat exchange device according to the present invention is defined in claim 1.

### Advantageous Effects of Invention

A heat exchange device according to an embodiment of the present invention generates water pulsing at a target flow ratio, thereby efficiently reducing scale adhesion inside a heat exchanger configured to allow heat exchange between water and refrigerant.

### Brief Description of Drawings

[Fig. 1] Fig. 1 is a block diagram schematically illustrating the configuration of a heat-pump water heater of Embodiment 1 of the present invention.
[Fig. 2] Fig. 2 is a diagram schematically illustrating a pulse generation unit around a heat exchanger of Embodiment 1 of the present invention.
[Fig. 3] Fig. 3 is a diagram illustrating a relation between a flow ratio and a flow speed of Embodiment 1 of the present invention.
[Fig. 4] Fig. 4 is a diagram illustrating a relation between a water-output temperature and a scale adhesion amount of Embodiment 1 of the present invention.
[Fig. 5] Fig. 5 is a diagram illustrating a relation between time and the water-output temperature of Embodiment 1 of the present invention.
[Fig. 6] Fig. 6 is a diagram illustrating a relation between the flow ratio and the water-output temperature of Embodiment 1 of the present invention.
[Fig. 7] Fig. 7 is a diagram schematically illustrating a pulse generation unit around another exemplary heat exchanger of Embodiment 1 of the present invention.

### Description of Embodiments

Hereinafter, embodiments of the present invention will be described with reference to the drawings.

Note that in each drawing, components denoted by the same reference signs are the same or equivalent components, which is common in the full text of the specification.

Moreover, the forms of the components shown in the specification are merely illustrative and the present invention is not limited to those forms described in the specification.

### Embodiment 1

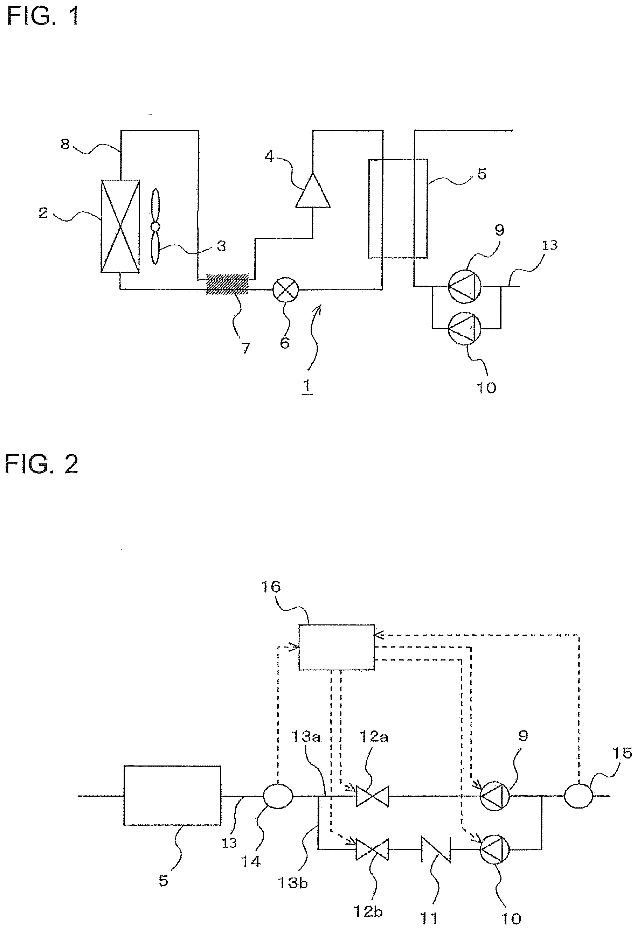

Fig. 1 is a block diagram schematically illustrating the configuration of a heat-pump water heater 1 of Embodiment 1 of the present invention.

As illustrated in Fig. 1, the heat-pump water heater 1 includes a first heat exchanger 2 configured to allow heat exchange between air and refrigerant, a fan 3 configured to send air to the first heat exchanger 2, a compressor 4 configured to compress the refrigerant, a second heat exchanger 5 configured to allow heat exchange between water and the refrigerant, an expansion valve 6, a high-low pressure heat exchanger 7, and a refrigerant pipe 8. These components serve as a refrigerant circuit through which the refrigerant circulates.

The heat-pump water heater 1 further includes a pump 9, a pulsing pump 10, and a water pipe 13. These components serve as a water circuit configured to heat water.

Fig. 2 is a diagram schematically illustrating a pulse generation unit around the second heat exchanger 5 of Embodiment 1 of the present invention.

As illustrated in Fig. 2, the water pipe 13 branches into two water pipes 13a and 13b. The water pipe 13a is provided with the pump 9 and a flow control valve 12a downstream of the pump 9. The water pipe 13b is provided with the pulsing pump 10, a check valve 11 downstream of the pulsing pump 10, and a flow control valve 12b downstream of the check valve 11. A flow sensor 14 is provided at a position where the water pipes 13a and 13b join. A water-input temperature sensor 15 is provided at a position before the water pipe 13 branches into the water pipes 13a and 13b. The pump 9, the pulsing pump 10, the check valve 11, the flow control valves 12a and 12b, and the water pipes 13a and 13b serve as the pulse generation unit.

The heat-pump water heater 1 includes a control unit 16. The control unit 16 includes a microcomputer provided with a CPU, a ROM, a RAM, and an input-output port. The control unit 16 is electrically connected to the flow sensor 14 and the water-input temperature sensor 15 to receive a result of detection at each sensor. The control unit 16 is electrically connected to the pump 9, the pulsing pump 10, and the flow control valves 12a and 12b to control these components.

The following describes operation of the heat-pump water heater 1 thus configured.

When refrigerant compressed by the compressor 4 flows into the second heat exchanger 5, energy is provided from the refrigerant to water at the second heat exchanger 5, and the temperature of the water increases accordingly. Having flowed out of the second heat exchanger 5, the refrigerant expands at the expansion valve 6, exchanges heat at the high-low pressure heat exchanger 7, and then flows into the first heat exchanger 2 to absorb heat from air. Having absorbed the heat, the refrigerant becomes gas after flowing out of the first heat exchanger 2 and then is transferred to the compressor 4 again. The temperature of water in the water pipe 13 is increased through repetition of these operations.

A scale component (calcium carbonate, CaCO₃) is deposited as follows. Carbon gas leaves behind calcium carbonate dissolving in water as the temperature of the water increases, and the solubility of the calcium carbonate decreases accordingly. The calcium carbonate is deposited through adhesion to the second heat exchanger 5. For this reason, calcium carbonate is likely to be deposited in the heat-pump water heater 1 that produces hot water from cold water.

The following describes a scale reduction operation of Embodiment 1.

When heat is exchanged at the second heat exchanger 5, air bubbles are generated on a heat-transfer surface. The concentration of calcium carbonate ions becomes large in small gaps between the air bubbles and the heat-transfer surface, facilitating scale deposition. To solve the problem, water pulses are generated so that the air bubbles are peeled by shear stress exerted at flow rate change, thereby facilitating peeling of scale cores adhered to the heat-transfer surface.

In Embodiment 1, water pulsing is generated at the pulsing pump 10 to reduce scale adhesion to the second heat exchanger 5. The control unit 16 causes water pulsing to the second heat exchanger 5 by alternately opening and closing (turning on and off) the pulsing pump 10 while keeping constant the flow rate of the pump 9.

The control unit 16 causes the target pulsing by adjusting the flow rates of the pump 9 and the pulsing pump 10 through the flow control valves 12a and 12b.

As described above, the control unit 16 opens and closes the pulsing pump 10 and adjusts the flow rate of pulsing through the flow control valve 12b. Instead of being opened and closed, the pulsing pump 10 may be changed in rotation speed. In a conventional technology disclosed in Japanese Unexamined Patent Application Publication No. 2014-16098, a flow ratio is at least 2, preferably at least 5, and pulsing is at least once within 10 seconds, preferably once in 5 seconds.

However, when the water pulsing increases the flow speed of water in the second heat exchanger 5 and the water pipe 13, impingement damage potentially occurs in a pipe. To solve the problem, the control unit 16 adjusts a water flow rate through the pulsing pump 10 and the flow control valve 12b so that the water flow speed is equal to or smaller than a flow speed at which the impingement damage occurs. A reference value of the flow speed for the occurrence of the impingement damage is equal to or smaller than 1.5 m/s.

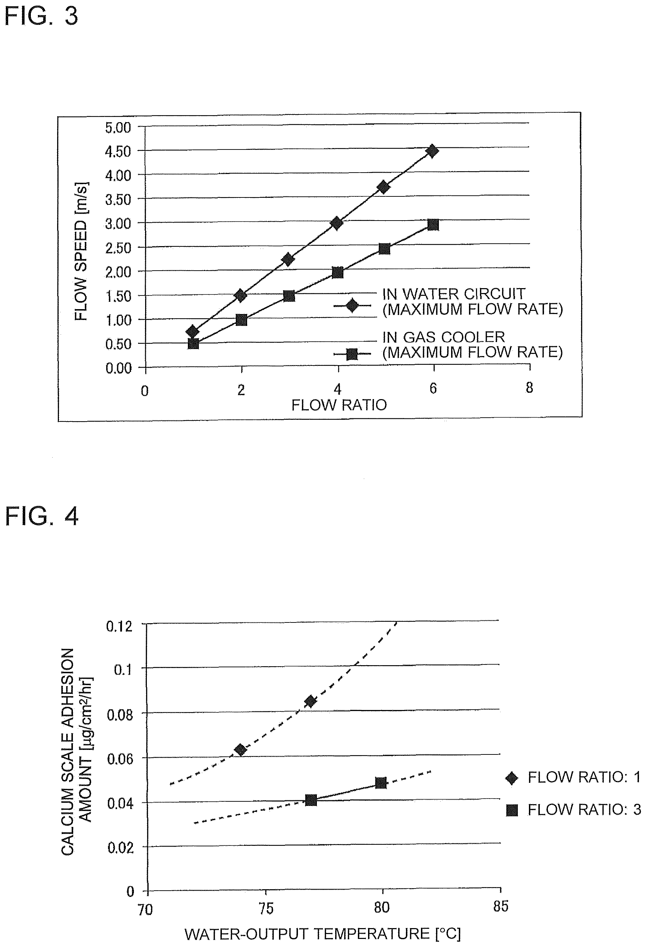

Fig. 3 is a diagram illustrating a relation between the flow ratio and the flow speed of Embodiment 1 of the present invention. Fig. 3 illustrates the flow speed inside the water pipe 13 and the flow speed (maximum allowable flow speed) inside the second heat exchanger 5, which are calculated from a water flow rate and a water pipe diameter of the heat-pump water heater 1 (an average flow rate through the flow path of the second heat exchanger 5 and the pipe diameter of the flow path).

When the flow ratio is 3, the flow speed (maximum allowable flow speed) inside the second heat exchanger 5 is equal to or smaller than 1.5 m/s, and thus no impingement damage occurs. The flow speed inside the water pipe 13 exceeds 1.5 m/s, and thus the impingement damage occurs. The occurrence of the impingement damage is avoided by employing the water pipe 13 made of stainless steel. In this manner, the flow ratio is set to 3 to avoid the impingement damage in the second heat exchanger 5 and increase pulsing in Embodiment 1. The flow ratio is not limited to 3, and may be another value.

Fig. 4 is a diagram illustrating a relation between a water-output temperature and a scale adhesion amount of Embodiment 1 of the present invention. Fig. 4 illustrates a scale-adhesion reduction effect when pulsing is performed with the flow ratio being 1 and 3. In a test that obtained the result illustrated in Fig. 4, gas coolers with and without pulsing were prepared and operated for 300 hours, and the scale adhesion amount was compared between the gas coolers. When the water-output temperature was 77 degrees C, the scale adhesion amount with the flow ratio being 3 was about half of that with the flow ratio being 1.

Thus, the scale adhesion can be reduced to half in the gas cooler with pulsing (with the flow ratio being 3) when the water-output temperature is the same between the gas cooler with pulsing and the gas cooler without pulsing. The reduction effect improves as the flow ratio increases. However, as described above, in Embodiment 1, the flow ratio is set to 3 to avoid the occurrence of the impingement damage in the second heat exchanger 5 and enhance pulsing.

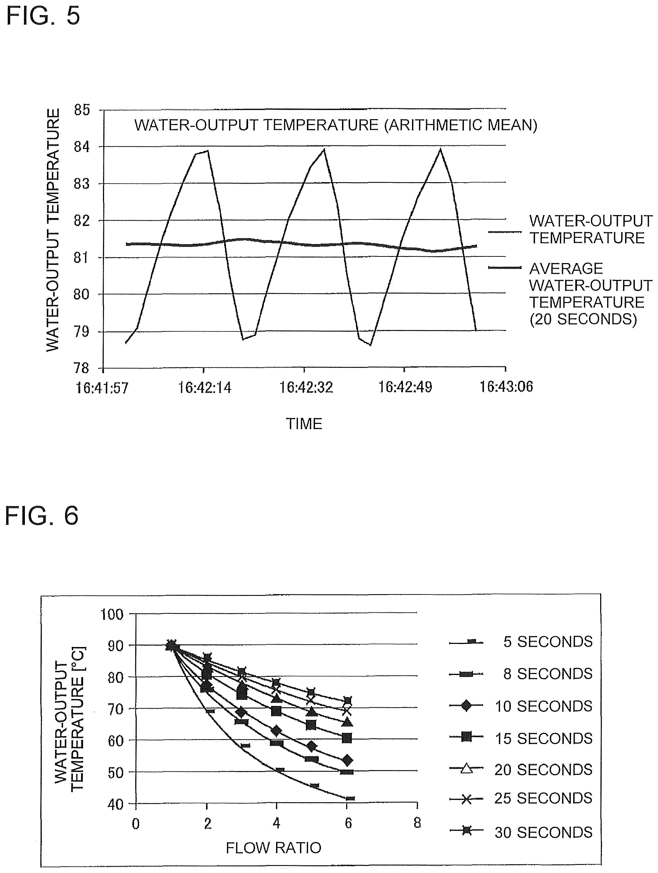

Fig. 5 is a diagram illustrating a relation between time and a water-output temperature of Embodiment 1 of the present invention.

A water-output temperature of the second heat exchanger 5 varies by water pulsing. Fig. 5 illustrates change of the water-output temperature when water was output at a flow ratio of 4 and a pulsing cycle of 20 seconds. The water-output temperature changes by ±2.5 degrees C approximately. The control unit 16 acquires, as a water-output temperature t at pulsing, an average water-output temperature over a time slot of ΔT seconds, and performs control to adjust the water-output temperature by adjusting the opening degrees of the pump 9, the pulsing pump 10, and the flow control valves 12a and 12b corresponding to a difference between the average water-output temperature and a target water-output temperature and a change amount. The control unit 16 sets the time slot of ΔT seconds, which is a period of calculation of the average water-output temperature, to be one to four times longer than the period of pulsing, and operates the heat-pump water heater 1 toward the target water-output temperature.

The scale adhesion is likely to occur when the average water-output temperature exceeds 75 degrees C. The control unit 16 performs the scale reduction operation so that the average water-output temperature is equal to or lower than 75 degrees C, at which the scale adhesion is unlikely to occur. The average water-output temperature is not limited to this value equal to or lower than 75 degrees C, and other values are applicable.

Fig. 6 is a diagram illustrating a relation between the flow ratio and the water-output temperature of Embodiment 1 of the present invention. As illustrated in Fig. 6, the water-output temperature decreases corresponding to the flow ratio and a pulsing interval (pulsing cycle). The water-output temperature decreases when the flow ratio changes from 1 to 5. The water-output temperature decreases as the pulsing interval decreases.

The water-output temperature decreases through pulsing control, and thus is preferably equal to or higher than 60 degrees C to avoid too much decrease in the temperature inside a hot-water tank. Thus, the control unit 16 sets the target water-output temperature to be equal to or higher than 60 degrees C to avoid excessive decrease in the temperature inside the hot-water tank, and equal to or lower than 75 degrees C at which the scale adhesion is unlikely to occur.

In Embodiment 1, the control unit 16 acquires, as the water-output temperature t at pulsing, the average water-output temperature over the time slot of ΔT seconds as described above, adjusts the opening degrees of the pump 9, the pulsing pump 10, and the flow control valves 12a and 12b corresponding to the difference between the average water-output temperature and the target water-output temperature and the change amount, and performs control to achieve a target flow ratio and a target pulsing interval for adjustment of the water-output temperature. The control unit 16 performs the pulsing control with the target flow ratio being set to 3 and with the target pulsing interval being set to 15 seconds, because of the relation with the water-output temperature illustrated in Fig. 6. The flow ratio is not limited to 3 and the pulsing interval is not limited to 15 seconds, and other values are applicable.

In this manner, in the heat-pump water heater 1 of Embodiment 1, the control unit 16 determines whether to generate pulsing depending on the target water-output temperature, leading to reduction in the number of times of start and stop of the pulsing pump 10. The reduction in the number of times of start and stop of the pulsing pump 10 reduces a load on the pulsing pump 10, and thus reduces the occurrence of failure of the pulsing pump 10.

The control unit 16 generates pulsing when a water-input temperature measured by the water-input temperature sensor 15 is equal to or lower than 40 degrees C, or does not perform pulsing operation when the water-input temperature exceeds 40 degrees C. This is because the pulsing control cannot be performed with the flow ratio set to 3 and the pulsing interval set to 15 seconds due to the relation with the water-output temperature when the water-input temperature exceeds 40 degrees C. The water-input temperature is not limited to equal to or lower than 40 degrees C, and other values are applicable.

As described above, in Embodiment 1, the control unit 16 sets the flow ratio to 3 and the pulsing interval to 15 seconds in the pulsing control. This configuration can prevent excessive decrease in the water-output temperature due to the water pulse generation, the occurrence of impingement damage in the water pipe 13 due to increase in the flow speed, and failure of the pulsing pump 10 due to repeated opening and closing of the pulsing pump 10 through the pulsing operation.

Although Fig. 1 illustrates a case in which the pulsing operation is performed by the two pumps of the pump 9 and the pulsing pump 10, a plurality of pulsing pumps may be installed in parallel so that, at failure of any of the pumps, the pulsing operation can be performed by another pulsing pump.

The flow control valves 12a and 12b are provided downstream of the pump 9 and the pulsing pump 10 to adjust the flow rates. However, the flow control valves 12a and 12b may be omitted so that the flow rates are adjusted by the pump 9 and the pulsing pump 10 only.

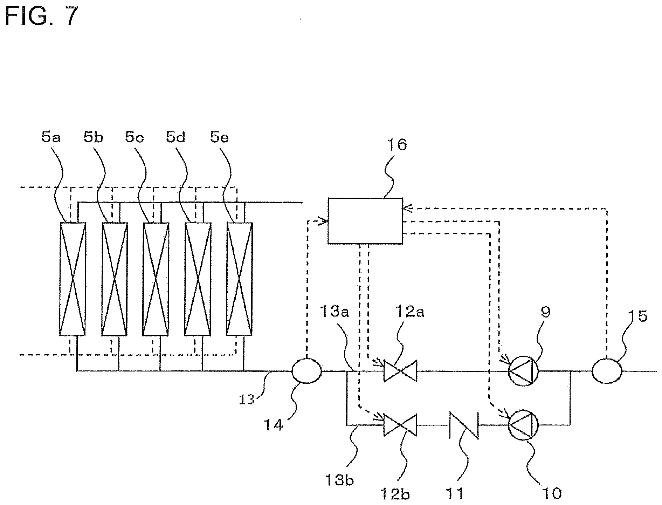

Fig. 7 is a diagram schematically illustrating a pulse generation unit around another exemplary heat exchanger of Embodiment 1 of the present invention. As illustrated in Fig. 7, the heat-pump water heater 1 may include the above-described pulse generation unit on the water pipe 13 branched into a plurality of second heat exchangers 5a, 5b, 5c, 5d, and 5e.

### Embodiment 2

The following describes Embodiment 2.

When opening and closing of the pulsing pump 10 are repeated in scale-adhesion reduction operation, failure of the pulsing pump 10 and the flow control valve 12b is likely to occur. When failure of the pump 9 and the flow control valve 12a, or failure of the pulsing pump 10 and the flow control valve 12b occurs during the pulsing operation, the operation at the flow ratio of 3 cannot be performed.

Thus, when the control unit 16 detects failure of the water-output temperature control or failure of the operation at the flow ratio of 3, and detects failure of one of the pumps, the control unit 16 stops the failed pump and performs emergency operation only with the other pump.

During the emergency operation, the control unit 16 does not perform the pulsing operation but performs normal operation at a constant flow rate, and displays the maintenance abnormality of a failed pump or flow control valve to prompt replacement or repair. When the failed pump is recovered, the control unit 16 returns to control to generate pulsing.

In this manner, in Embodiment 2, production of hot water can be reliably continued at failure of a water circuit component such as a pump and a flow control valve.

### Embodiment 3

The following describes Embodiment 3.

The control unit 16 monitors the state of scale adhesion to the second heat exchanger 5 by comparing a difference between the water-input temperature of the second heat exchanger 5 from the water-input temperature sensor 15 and the average water-output temperature acquired as described in Embodiment 1, and the change amount, and changes the flow ratio corresponding to the scale adhesion amount.

For example, the control unit 16 calculates water heating capability from the water-input temperature, the average water-output temperature, and the flow rate of the second heat exchanger 5, and calculates the thermal conductivity of a gas cooler on the basis of the heating capability, a water input-output temperature, and a refrigerant input-output temperature. The thermal conductivity decreases as the scale adhesion develops further. The control unit 16 changes the target flow ratio while monitoring the degree of scale adhesion on the basis of the decrease in the thermal conductivity.

In the change of the target flow ratio, the control unit 16 performs control to increase the flow ratio to, for example, 4 to further reduce the scale adhesion.

When the thermal conductivity of a gas cooler for which the degree of scale adhesion is monitored becomes equal to or smaller than a predetermined value, development of the scale adhesion inside the gas cooler is indicated to be about to cause blockage, and thus the control unit 16 may prompt chemical cleaning of the inside of the gas cooler.

### Embodiment 4

The following describes Embodiment 4.

Water characteristics (calcium hardness, M alkalinity, and pH) at a place where the heat-pump water heater 1 is installed are input to the product and recorded in the control unit 16. The control unit 16 changes the flow ratio corresponding to a supersaturation degree obtained from the water characteristics. The supersaturation degree is the solubility of calcium carbonate (CaCO₃) in water with respect to that of a saturated state. When the supersaturation degree is 1 or larger, calcium carbonate is likely to be deposited in water.

Pulsing at the flow ratio of 3 is generated for water characteristics having the supersaturation degree twice as large as that of the current range of water characteristics, which indicates scale adhesion development similarly to the current range of water characteristics. A case is assumed where the supersaturation degree is proportional to the speed of scale adhesion. The control unit 16 sets the flow ratio to 3 or larger when the supersaturation degree obtained from water characteristics is twice or more as large, or sets the flow ratio to 3 or smaller when the supersaturation degree is twice or less as large.

In this manner, Embodiment 4 can achieve suitable pulsing control corresponding to water characteristics on a site where the heat-pump water heater 1 is installed.

Of Embodiments 1 to 4 described above, the control unit 16 generates water pulsing at the flow ratio of 3 as a target flow ratio based on a maximum allowable flow speed of 1.5 m/s inside the second heat exchanger 5, which is determined from the water flow rate and the water pipe diameter of the second heat exchanger 5 of the heat-pump water heater 1. The water pulsing at the target flow ratio can efficiently reduce scale adhesion inside the second heat exchanger 5 configured to allow heat exchange between water and refrigerant.

The control unit 16 operates the pump 9 as one of pumps at a constant flow rate, opens and closes the pulsing pump 10 as the other pump, and controls the flow control valves 12a and 12b so that water merged through the two pumps 9 and 10 has the flow ratio of 3. In this manner, pulsing of the water merged through the two pumps 9 and 10 can be performed at a target flow ratio. The control unit 16 may operate the one pump 9 at a constant flow rate and opening and closing the other pulsing pump 10 so that water merged through the two pumps 9 and 10 has the flow ratio of 3.

The control unit 16 acquires an average water-output temperature, and controls the two pumps 9 and 10 and the flow control valves 12a and 12b at a target flow ratio and a target pulsing interval corresponding to the average water-output temperature and a target water-output temperature. With this configuration, the water-output temperature decreases as the flow ratio increases, and the water-output temperature decreases as the pulsing interval decreases, suitable water pulsing can be performed with the water-output temperature taken into account by setting the target flow ratio and the target pulsing interval corresponding to the average water-output temperature and the target water-output temperature.

The control unit 16 sets a period of calculation of the average water-output temperature, to be one to four times longer than the period of pulsing generated by the pulse generation unit, and calculates the average water-output temperature. This configuration achieves accurate calculation of the average water-output temperature.

The control unit 16 sets the target water-output temperature to be between 60 degrees C and 75 degrees C inclusive. This configuration can prevent excessive decrease in the temperature inside the hot-water tank when the water-output temperature decreases through the pulsing control. The scale adhesion is unlikely to generate because the water-output temperature is not too high.

The control unit 16 controls the two pumps 9 and 10 and the flow control valves 12a and 12b at the target flow ratio corresponding to the water-input temperature at, for example, 40 degrees C. This configuration allows determination of whether to perform the pulsing control depending on the water-input temperature.

When the control unit 16 detects a failure of a pump on one of branched flow paths, the control unit 16 performs emergency operation with another pump on another branched flow path. With this configuration, production of hot water can be reliably continued at failure of a water circuit component such as a pump and a flow control valve.

The control unit 16 controls the two pumps 9 and 10 and the flow control valves 12a and 12b at the target flow ratio corresponding to the water-input temperature and the average water-output temperature. With this configuration, the state of scale adhesion to the second heat exchanger 5 can be monitored so that the target flow ratio is changed corresponding to the amount of scale adhesion.

The control unit 16 records water characteristics of water flowing through the water pipe 13, and controls the two pumps 9 and 10 and the flow control valves 12a and 12b at the target flow ratio corresponding to the supersaturation degree obtained from the water characteristics. This configuration can achieve suitable pulsing control corresponding to water characteristics on a site where the heat-pump water heater 1 is installed.

### Reference Signs List

1 heat-pump water heater 2 first heat exchanger 3 fan 4 compressor 5, 5a, 5b, 5c, 5d, 5e second heat exchanger 6 expansion valve
7 high-low pressure heat exchanger 8 refrigerant pipe 9 pump 10 pulsing pump 11 check valve 12a flow control valve 12b flow control valve 13 water pipe 13a water pipe 13b water pipe 14 flow sensor 15 water-input temperature sensor 16 control unit

## Claims

1. A heat exchange device comprising:
a heat exchanger (5, 5a, 5b, 5c, 5d, 5e) configured to allow heat exchange between water and refrigerant;
a pulse generation unit disposed on a flow path (13) of water flowing into the heat exchanger (5, 5a, 5b, 5c, 5d, 5e), configured to generate pulsing of water flowing through the flow path (13); and
a control unit (16) configured to control the pulse generation unit,
the control unit (16) being configured to control the pulse generation unit at a target flow ratio **characterized in that** the target flow ratio is based on a maximum allowable flow speed determined from an average flow rate through a flow path of the heat exchanger (5, 5a, 5b, 5c, 5d, 5e) and a pipe diameter of the flow path of the heat exchanger (5, 5a, 5b, 5c, 5d, 5e) wherein the flow path (13) is a water pipe made of stainless steel; and the pulse generation unit includes a plurality of pumps (9, 10) each disposed on a corresponding one of a plurality of additional flow paths (13a, 13b) branched from the flow path (13), and the control unit (16) is configured to operate one (9) of the plurality of pumps (9, 10) at a constant flow rate and turning on and off another one (10) of the plurality of pumps (9, 10) so that water merged through the plurality of pumps (9, 10) has the target flow ratio.

2. The heat exchange device of claim 1, wherein
the pulse generation unit (9, 10) includes a flow control valve (12a, 12b) disposed on a water flow path downstream of the plurality of pumps (9, 10), and
the control unit (16) is configured to further control the flow control valve (12a, 12b) so that water merged through the plurality of pumps (9, 10) has the target flow ratio.

3. The heat exchange device of claim 2, wherein the control unit (16) is configured to acquire an average water-output temperature and control the pulse generation unit at the target flow ratio and a target pulsing interval corresponding to the average water-output temperature and a target water-output temperature.

4. The heat exchange device of claim 3, wherein the control unit (16) is configured to calculate the average water-output temperature over a period of calculation of the average water-output temperature, the period of calculation being set to be one to four times longer than a period of pulsing generated by the pulse generation unit.

5. The heat exchange device of claim 3 or 4, wherein the control unit (16) is configured to set the target water-output temperature to be between 60 degrees C and 75 degrees C inclusive.

6. The heat exchange device of any one of claims 1 to 5, further comprising a water-input temperature sensor (15) configured to measure a water-input temperature, wherein the control unit (16) is configured to control the pulse generation unit at the target flow ratio corresponding to the water-input temperature.

7. The heat exchange device of any one of claims 1 to 6, wherein, when the control unit (16) detects a failure of one of the plurality of pumps (9, 10), the control unit (16) is configured to perform operation with at least another one of the plurality of pumps (9, 10).

8. The heat exchange device of any one of claims 1 to 7, further comprising a water-input temperature sensor (15) configured to measure a water-input temperature, wherein the control unit (16) is configured to acquire an average water-output temperature and control the pulse generation unit at the target flow ratio corresponding to the water-input temperature and the average water-output temperature.

9. The heat exchange device of any one of claims 1 to 8, wherein the control unit (16) is configured to record characteristics of water flowing through the flow path (13) and control the pulse generation unit at the target flow ratio corresponding to a supersaturation degree obtained from the characteristics of the water.

10. A heat-pump water heater (1) comprising the heat exchange device of any one of claims 1 to 9.

## Patentansprüche

1. Wärmetauscheinrichtung, umfassend:
einen Wärmetauscher (5, 5a, 5b, 5c, 5d, 5e), der eingerichtet ist, Wärmetausch zwischen Wasser und Kältemittel zu ermöglichen;
eine Pulserzeugungseinheit, die an einem Strömungspfad (13) von in den Wärmetauscher (5, 5a, 5b, 5c, 5d, 5e) einströmendem Wasser angeordnet ist und eingerichtet ist, Pulsieren des durch den Strömungspfad (13) strömenden Wassers zu erzeugen; und
eine Steuereinheit (16), die eingerichtet ist, die Pulserzeugungseinheit zu steuern,
wobei die Steuereinheit (16) eingerichtet ist, die Pulserzeugungseinheit mit einem Zielströmungsverhältnis zu steuern, **dadurch gekennzeichnet, dass** das Zielströmungsverhältnis auf einer maximal zulässigen Strömungsgeschwindigkeit basiert, die bestimmt ist aus einer Durchschnittsströmungsrate durch einen Strömungspfad des Wärmetauschers (5, 5a, 5b, 5c, 5d, 5e) und einem Leitungsdurchmesser des Strömungspfades des Wärmetauschers (5, 5a, 5b, 5c, 5d, 5e),
wobei der Strömungspfad (13) eine Wasserleitung aus rostfreiem Stahl ist; und die Pulserzeugungseinheit eine Vielzahl von Pumpen (9, 10) umfasst, die jeweils an einem entsprechenden von einer Vielzahl von zusätzlichen Strömungspfaden (13a, 13b) angeordnet sind, die von dem Strömungspfad (13) abgezweigt sind, und
die Steuereinheit (16) eingerichtet ist, eine Pumpe (9) von der Vielzahl von Pumpen (9, 10) mit einer konstanten Strömungsrate zu betreiben und eine andere Pumpe (10) von der Vielzahl von Pumpen (9, 10) einzuschalten und auszuschalten, so dass durch die Vielzahl von Pumpen (9, 10) zusammengeführtes Wasser das Zielströmungsverhältnis aufweist.

2. Wärmetauscheinrichtung nach Anspruch 1, wobei
die Pulserzeugungseinheit (9, 10) ein Strömungssteuerventil (12a, 12b) aufweist, das an einem Wasserströmungspfad stromabwärts der Vielzahl von Pumpen (9, 10) angeordnet ist, und
die Steuereinheit (16) eingerichtet ist, das Strömungssteuerventil (12a, 12b) ferner zu steuern, so dass das durch die Vielzahl von Pumpen (9, 10) zusammengeführtes Wasser das Zielströmungsverhältnis aufweist.

3. Wärmetauscheinrichtung nach Anspruch 2, wobei die Steuereinheit (16) eingerichtet ist, eine Wasserausgang-Durchschnittstemperatur zu erwerben und die Pulserzeugungseinheit mit dem Zielströmungsverhältnis und einem Zielpulsierungsintervall entsprechend der Wasserausgang-Durchschnittstemperatur und einer Wasserausgang-Zieltemperatur zu steuern.

4. Wärmetauscheinrichtung nach Anspruch 3, wobei die Steuereinheit (16) eingerichtet ist, die Wasserausgang-Durchschnittstemperatur über einen Berechnungszeitraum der Wasserausgang-Durchschnittstemperatur zu berechnen, wobei der Berechnungszeitraum eingestellt ist, ein- bis viermal länger zu sein als ein durch die Pulserzeugungseinheit erzeugter Pulsierungszeitraum.

5. Wärmetauscheinrichtung nach Anspruch 3 oder 4, wobei die Steuereinheit (16) eingerichtet ist, die Wasserausgang-Zieltemperatur einzustellen, zwischen 60 Grad Celsius und 75 Grad Celsius inklusive zu sein.

6. Wärmetauscheinrichtung nach einem der Ansprüche 1 bis 5, ferner umfassend einen Wassereingang-Temperatursensor (15), der eingerichtet ist, eine Wassereingangstemperatur zu messen, wobei die Steuereinheit (16) eingerichtet ist, die Pulserzeugungseinheit mit dem der Wassereingangstemperatur entsprechenden Zielströmungsverhältnis zu steuern.

7. Wärmetauscheinrichtung nach einem der Ansprüche 1 bis 6, wobei, wenn die Steuereinheit (16) einen Ausfall einer von der Vielzahl von Pumpen (9, 10) erfasst, die Steuereinheit (16) eingerichtet ist, Betrieb mit zumindest einer anderen von der Vielzahl von Pumpen (9, 10) durchzuführen.

8. Wärmetauscheinrichtung nach einem der Ansprüche 1 bis 7, ferner umfassend einen Wassereingang-Temperatursensor (15), der eingerichtet ist, eine Wassereingangstemperatur zu messen, wobei die Steuereinheit (16) eingerichtet ist, eine Wasserausgang-Durchschnittstemperatur zu erwerben und die Pulserzeugungseinheit mit dem Zielströmungsverhältnis entsprechend der Wassereingangstemperatur und der Wasserausgang-Durchschnittstemperatur zu steuern.

9. Wärmetauscheinrichtung nach einem der Ansprüche 1 bis 8, wobei die Steuereinheit (16) eingerichtet ist, Eigenschaften des durch den Strömungspfad (13) strömenden Wassers aufzuzeichnen und die Pulserzeugungseinheit mit dem Zielströmungsverhältnis entsprechend einem aus den Eigenschaften des Wassers erhaltenen Übersättigungsgrad zu steuern.

10. Wärmepumpe-Wassererwärmer (1), umfassend die Wärmetauscheinrichtung nach einem der Ansprüche 1 bis 9.

## Revendications

1. Dispositif d'échange de chaleur comprenant :
un échangeur de chaleur (5, 5a, 5b, 5c, 5d, 5e) configuré pour permettre un échange de chaleur entre de l'eau et un réfrigérant ;
une unité de génération d'impulsions disposée sur un chemin de flux (13) d'eau qui circule dans l'échangeur de chaleur (5, 5a, 5b, 5c, 5d, 5e), configurée pour générer des impulsions d'eau qui circule à travers le chemin de flux (13) ; et
une unité de commande (16) configurée pour contrôler l'unité de génération d'impulsions,
l'unité de commande (16) étant configurée pour contrôler l'unité de génération d'impulsions à un débit cible, **caractérisé en ce que** le débit cible est basé sur la vitesse d'écoulement maximale permise déterminée à partir d'un débit moyen à travers un chemin de flux de l'échangeur de chaleur (5, 5a, 5b, 5c, 5d, 5e), et du diamètre de canalisation du chemin de flux de l'échangeur de chaleur (5, 5a, 5b, 5c, 5d, 5e),
où le chemin de flux (13) est une canalisation d'eau réalisée en acier inoxydable ; et l'unité de génération d'impulsions comprend une pluralité de pompes (9, 10) disposées chacune sur l'un correspondant d'une pluralité de chemins de flux supplémentaires (13a, 13b) ramifiés à partir du chemin de flux (13), et
l'unité de commande (16) est configurée pour actionner l'une (9) de la pluralité de pompes (9, 10) à un débit constant, et pour mettre en service et hors service une autre (10) de la pluralité de pompes (9, 10), de telle sorte que l'eau mélangée à travers la pluralité de pompes (9, 10), présente le débit cible.

2. Dispositif d'échange de chaleur selon la revendication 1, où
l'unité de génération d'impulsions (9, 10) comprend une soupape de commande de flux (12a, 12b) disposée sur un chemin de flux d'eau en aval de la pluralité de pompes (9, 10), et
l'unité de commande (16) est configurée pour contrôler en outre la soupape de commande de flux (12a, 12b) de telle sorte que l'eau mélangée à travers la pluralité de pompes (9, 10), présente le débit cible.

3. Dispositif d'échange de chaleur selon la revendication 2, où l'unité de commande (16) est configurée pour acquérir une température de sortie d'eau moyenne, et pour contrôler l'unité de génération d'impulsions au débit cible, et un intervalle d'impulsions cible correspondant à la température de sortie d'eau moyenne, et à une température de sortie d'eau cible.

4. Dispositif d'échange de chaleur selon la revendication 3, où l'unité de commande (16) est configurée pour calculer la température de sortie d'eau moyenne sur une période de calcul de la température de sortie d'eau moyenne, la période du calcul étant réglée de façon à être de une à quatre fois plus longue qu'une période d'impulsions générée par l'unité de génération d'impulsions.

5. Dispositif d'échange de chaleur selon la revendication 3 ou 4, où l'unité de commande (16) est configurée pour régler la température de sortie d'eau cible entre 60 °C et 75 °C inclus.

6. Dispositif d'échange de chaleur selon l'une quelconque des revendications 1 à 5, comprenant en outre un capteur de température d'entrée d'eau (15), configuré pour mesurer la température d'entrée d'eau, où l'unité de commande (16) est configurée pour contrôler l'unité de génération d'impulsions au débit cible correspondant à la température d'entrée d'eau.

7. Dispositif d'échange de chaleur selon l'une quelconque des revendications 1 à 6, où, lorsque l'unité de commande (16) détecte une défaillance de l'une de la pluralité de pompes (9, 10), l'unité de commande (16) est configurée pour exécuter un fonctionnement avec une autre au moins de la pluralité de pompes (9, 10).

8. Dispositif d'échange de chaleur selon l'une quelconque des revendications 1 à 7, comprenant en outre un capteur de température d'entrée d'eau (15), configuré pour mesurer la température d'entrée d'eau, où l'unité de commande (16) est configurée pour acquérir une température de sortie d'eau moyenne, et pour contrôler l'unité de génération d'impulsions au débit cible correspondant à la température d'entrée d'eau et à la température de sortie d'eau moyenne.

9. Dispositif d'échange de chaleur selon l'une quelconque des revendications 1 à 8, où l'unité de commande (16) est configurée pour enregistrer des caractéristiques de l'eau qui circule à travers le chemin de flux (13), et pour contrôler l'unité de génération d'impulsions au débit cible correspondant à un degré de sursaturation obtenu à partir des caractéristiques de l'eau.

10. Chauffe-eau à pompe à chaleur (1) comprenant le dispositif d'échange de chaleur selon l'une quelconque des revendications 1 à 9.
